# EUROPÄISCHE PATENTSCHRIFT

(11) **EP 2 592 283 B1**
(45) Veröffentlichungstag und Bekanntmachung des Hinweises auf die Patenterteilung: **20.09.2017**
(21) Anmeldenummer: 12007046.1
(22) Anmeldetag: 11.10.2012
(51) Int. Cl.: F16B 7/04, F16B 21/09

(54) **Steckverbinder für ein Möbel**
Connector for furniture
Connecteur pour meuble

(30) Priorität: 08.11.2011 DE 202011107600 U
(43) Veröffentlichungstag der Anmeldung: 15.05.2013
(73) Patentinhaber: Naber Holding GmbH & Co. KG, 48529 Nordhorn (DE)
(72) Erfinder: Naber, Hans-Joachim, 48527 Nordhorn (DE); Schindler, Kilian, 76185 Karlsruhe (DE)
(74) Vertreter: Angerhausen, Christoph

(56) Entgegenhaltungen:
- DE-A1- 2 242 981
- DE-A1- 2 546 526
- GB-A- 853 358
- US-A1- 2008 029 677

## Beschreibung

Die Erfindung betrifft einen Steckverbinder für ein Möbel, insbesondere für die Montage von Einlegeböden oder dergleichen eines Regalsystems auf gewünschter Höhe an den Eckpfosten des Regalsystems, mit einem Steckverbinderkörper, der ein erstes Ende aufweist, und mit einem Lagerlement, das lösbar mit dem Steckverbinderkörper verbunden ist, wobei das erste Ende einen Befestigungsabschnitt mit einer Anlagefläche und das Lagerelement ein Rastelement aufweist, das sich mit seinem freien Ende durch die Anlagefläche hindurch in den Befestigungsabschnitt erstreckt, wenn der Steckverbinderkörper mit dem Lagerelement in Verbindung gebracht ist, wobei der Steckverbinderkörper ein dem ersten Ende gegenüber angeordnetes zweites Ende aufweist, das einen Verbinder für ein Hohlprofil aufweist, wobei der Verbinder mindestens eine Führungsfläche aufweist, über die das Hohlprofil entlang seiner Innenseite oder einer Außenseite auf den Verbinder aufschiebbar ist, und wobei der Verbinder weiterhin eine Lagerfläche mit einer Rastklinke aufweist, die in eine Aufnahme des Hohlprofils einrastet, wenn das Hohlprofil auf den Verbinder aufgeschoben ist. Ein derartiger Steckverbinder ist aus der DE 22 42 981 A1 bekannt. Ähnliche Verbinder beschreiben auch die US 2008/0029677 A1, sowie die DE 2 242 981. Aus der DE 202 13 924 U1 ist weiterhin eine Bodenträgervorrichtung für Einlegeböden bekannt, die ein Bodenträgergehäuse aufweist, das in die Stirnfläche eines Einlegebodens eingesetzt und zur Aufnahme eines Bodenträgerzapfens ausgebildet ist. Der Bodenträgerzapfen ist in eine im gegenüberliegenden Möbelkorpus angeordnete Aufnahmebohrung einsetzbar, wobei das Bodenträgergehäuse einen zur Unterseite des Einlegebodens offenen, parallel zum Bodenträgerzapfen sich erstreckenden Schlitz aufweist, an den sich ein teilkreiszylindrisch ausgebildeter Aufnahmebereich für den Bodenträgerzapfen anschließt. Der Aufnahmebereich weist dabei einen Innendurchmesser auf, der dem Außendurchmesser des aufgenommenen Bodenträgerzapfens entspricht. Am Bodenträgergehäuse ist ein quer zur Stirnfläche des Einlegebodens verschieblich angeordneter Schieber gelagert, der zum Übergreifen und Abdecken des Schlitzes ausgebildet ist.

Es ist die Aufgabe der Erfindung, einen Steckverbinder für ein Möbel vorzuschlagen, der mit technisch einfachen Mitteln realisiert und dabei werkzeuglos zu montieren ist.

Diese Aufgabe wird erfindungsgemäß von einem Steckverbinder der eingangs genannten Art gelöst, bei dem die zweite Seite des Steckverbinderkörpers einen Verbindungszapfen aufweist, der durch eine Durchlassöffnung des Lagerelements hindurch tritt, wenn der Steckverbinderkörper mit dem Lagerelement in Verbindung steht, und dass die Anlagefläche die Außenkontur eines Tischbeins, eines Regalpfostens oder dergleichen abbildet. Vorteilhafte Ausführungsformen sind Gegenstand der abhängigen Ansprüche.
Um den Steckverbinder mit einem Tischbein, einem Regalpfosten oder dergleichen zu verbinden, kann in einem ersten Schritt das Lagerelement mit seinem Rastelement in eine Ausnehmung beispielsweise eines Regalpfostens eingesetzt werden. Die Aufnahme des Regalpfostens kann beispielsweise ein vertikales Langloch sein, das an seinem oberen Ende eine Aufweitung für die Aufnahme des Rastelements aufweist. In diesem Fall kann das Rastelement ein Zapfen sein, der an seinem freien Ende ein Kopfstück aufweist, das einen größere Durchmesser als der verbleibende Teil des Zapfens aufweist. Auf diese Weise bildet das Rastelement mit Hilfe seines Kopfstücks einen Hinterschnitt, der die Begrenzungsseiten des Langlochs zwecks Fixierung des Lagerelements an dem Regalpfosten hintergreifen kann, nachdem das Kopfstück durch die Aufweitung des Langlochs hindurch in den Regalpfosten eingesetzt und vertikal entlang des Langlochs verschoben worden ist. Nachdem das Lagerelement auf die vorbeschriebene Weise mit dem Regalpfosten verbunden worden ist, kann das Lagerelement mit dem Steckverbinderkörper verbunden werden, wobei die Anlagefläche des Befestigungsabschnitts mit der Außenfläche des Regalpfostens zur Anlage gebracht wird. Mit dem Verbinden von dem Lagerelement mit dem Steckverbinderkörper wird das Lagerelement in der Nut des Regalpfostens verspannt, indem sich der Steckverbinderkörper über die Anlagefläche an dem Regalpfosten abstützt.

Der Steckverbinder kann beispielsweise an den vier Ecken eines Einlegebodens vorgesehen sein, wobei Paare von diagonal gegenüberliegenden Steckverbindern jeweils ein Hohlprofil miteinander verbunden sind und sich somit aneinander abstützen können. Vorzugsweise werden bei dieser Ausführungsform daher zwei Hohlprofile verwendet, wobei jeweils diagonal zueinander angeordnete Verbinder über ein Hohlprofil miteinander verbunden sind. Der Verbinder kann beliebig ausgeführt sein und soll nicht auf bestimmte Verbinder beschränkt sein.

Um eine möglichst einfache Montage zu ermöglichen, ist der Verbinder jedoch vorzugsweise als ein wiederauslösbares Rastelement ausgeführt.

Eine zweckmäßige Ausgestaltung der bevorzugten Ausführungsform umfasst einen Verbinder, der einen Sockel aufweist, wobei der Sockel einen Umfang aufweist, der zumindest abschnittsweise formschlüssig mit der Innenseite oder der Außenseite des Hohlprofils in Verbindung steht, wenn das Hohlprofil auf dem Verbinder aufgeschoben ist. Erfindungsgemäß weist der Steckverbinderkörper eine erste Seite auf, die als Lagerfläche für eine Tischplatte, einen Einlegeboden oder dergleichen ausgebildet ist, und eine der ersten Seite gegenüberliegende zweite Seite, die auf dem Lagerelement lagert, wenn das Lagerelement mit dem Steckverbinderkörper in Verbindung steht. Es wird bevorzugt, dass die erste und die zweite Seite zumindest abschnittsweise als zueinander parallele Flächen ausgebildet sind.

Zur Herstellung einer kraftschlüssigen Verbindung zwischen dem Steckverbinderkörper und dem Lagerelement, welche einerseits einfach herstellbar und ebenso einfach wieder auslösbar ist, ist vorgesehen, dass die zweite Seite des Steckverbinderkörpers einen Verbindungszapfen aufweist, der durch eine Durchlassöffnung des Lagerelements hindurchtritt, wenn der Steckverbinderkörper mit dem Lagerelement in Verbindung steht. Vorzugsweise werden der Steckverbinderkörper und das Lagerelement beim Verbinden gegeneinander verspannt.

Bei einer Ausführungsform der Erfindung weist der Steckverbinderkörper an gegenüberliegenden Seiten jeweils mindestens einen Widerhaken auf, der in dem Bereich zwischen dem ersten und dem zweiten Ende des Steckverbinderkörpers ausgebildet ist und dessen freies Ende sich in Richtung des ersten Endes des Steckverbinderkörpers erstreckt. Mit Hilfe der Widerhaken kann sich der Steckverbinder beispielsweise an Abkantungen in den Eckbereichen eines Einlegebodens innenseitig abstützen, wenn der Steckverbinderkörper gegenüber dem Lagerelement beim Einsetzen des Einlegebodens wie vorbeschrieben verspannt wird. Anstelle der Widerhaken kann der Steckverbinder jedoch auch an der ersten und der zweiten Seite aufgeweitet sein und dazu mindestens eine bauchige Anformung aufweisen.

Bei einer Ausführungsform der Erfindung wird die Funktion der Widerhaken von mindestens einem bauchigen Ansatz übernommen, von dem an dem Steckverbinderkörper an gegenüberliegenden Seiten dieses jeweils mindestens einer vorgesehen ist. Der Steckverbinderkörper weist dadurch im Bereich der gegenüberliegenden Ansätze eine Abmessung auf, die größer als die maximale Weite einer Ausnehmung eines Einlegebodens oder dergleichen ist, in welche der Steckverbinder eingesetzt werden soll.

Beispielhafte Ausführungsformen der Erfindung werden anhand der nachfolgenden Figuren erläutert. Dabei zeigt:
- Figur 1: das Lagerelement einer ersten Ausführungsform des erfindungsgemäßen Steckverbinders;
- Figur 2: das Lagerelement gemäß Figur 1, das in ein Tischbein eingesetzt ist;
- Figuren 3a -3d: vier Ansichten des Steckverbinderkörpers gemäß einer ersten Ausführungsform der Erfindung;
- Figuren 4a - 4d: vier Ansichten einer zweiten Ausführungsform des erfindungsgemäßen Steckverbinderkörpers;
- Figur 5: einen Einlegeboden mit jeweils einem Steckverbinderkörper an jeder seiner Ecken;
- Figur 6: eine Detailansicht der Unterseite des Einlegebodens gemäß Figur 5 im Eckbereich; und
- Figur 7: die Detailansicht gemäß Figur 6 bei in dem Eckbereich des Einlegebodens befestigtem Steckverbinderkörper.

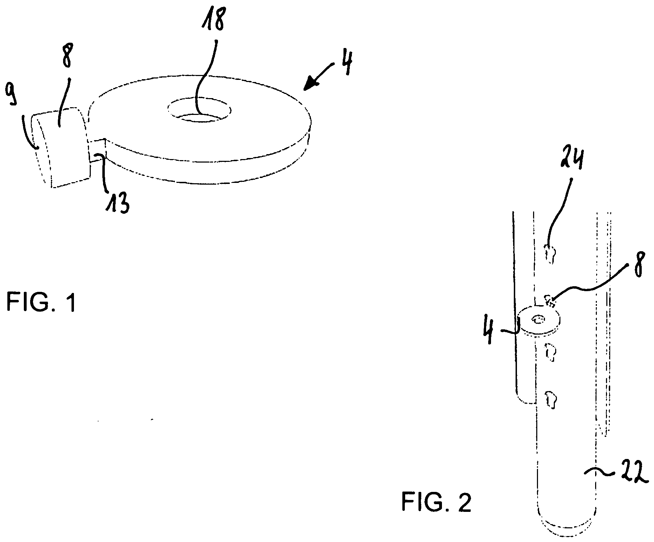

Figur 1 zeigt eine erste Ausführungsform des erfindungsgemäßen Lagerelements 4. Dieses weist ein Rastelement 8 auf, das einen Zapfen 13 umfasst sowie an seinem freien Ende 9 ein Kopfstück, das gegenüber dem Zapfen 13 einen größeren Durchmesser aufweist und damit einen Hinterschnitt ausbildet.

Wie in Figur 2 dargestellt ist, kann das Lagerelement über ein Langloch (24) mit einem aufgeweiteten oberen Einlassende in ein als Hohlprofil ausgestaltetes Beinelement 22 eingesetzt werden. Sobald das Rastelement zumindest soweit in das Beinelement 22 eingesteckt ist, dass sein Kopfstück an dem freien Ende 9 vollständig im Innern des Beinelements 22 angeordnet ist, kann das Lagerelement 4 vertikal entlang den Begrenzungsflächen des Langlochs 24 vertikal nach unten verlagert werden. In einer unteren Rastposition hintergreift das Kopfstück an dem freien Ende des Lagerelements 4 das Hohlprofil des Beinelements 23 von innen, so dass in dieser Rastposition eine kraftschlüssige Verbindung zwischen dem Lagerelement 4 und dem Beinelement 22 hergestellt ist.

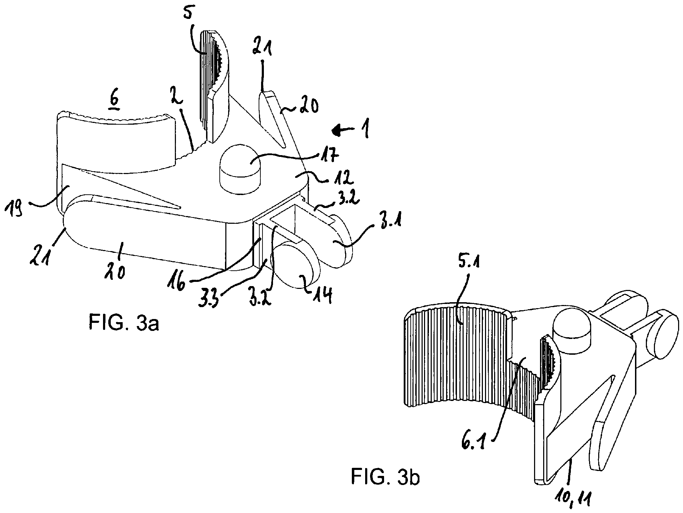

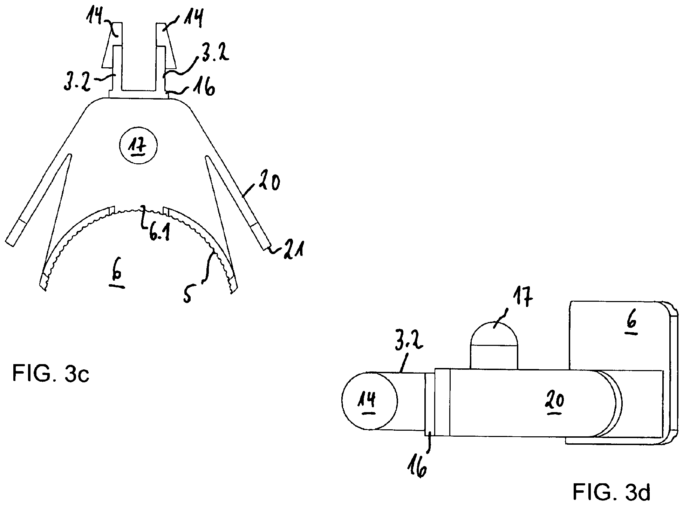

In den Figuren 3a bis 3d ist ein Steckverbinderkörper 1 dargestellt, der in Verbindung mit dem Lagerelement 4 gemäß den Figuren 1 und 2 verwendet werden kann. Dieser umfasst ein erstes Ende 2, mit einem Befestigungsabschnitt 6, der eine Anlagefläche 5 aufweist. Zur Verbesserung der Anlage an einem Tischbein oder dergleichen weist die Anlagefläche 5 eine Profilierung 5.1 auf. Die Anlagefläche 5 wird durch einen Durchlass 6.1 unterbrochen. Der Steckverbinderkörper 1 weist ein dem ersten Ende 2 gegenüber angeordnetes zweites Ende 3 auf, das einen Verbinder 3.1 aufweist. Der Verbinder 3.1 ist derart ausgestaltet, dass er mit einem Hohlprofil innenseitig in Eingriff gebracht werden kann, indem dieses über den Verbinder 3.1 geschoben wird. Dazu weist der Verbinder 3.1 Führungsflächen 3.2 auf, über die das nicht dargestellte Hohlprofil entlang seiner Innenseite auf den Verbinder aufgeschoben werden kann. Der Verbinder 3.1 weist darüber hinaus Lagerflächen 3.3 an gegenüberliegenden flexiblen Rastklinke 14 auf, die in einen Durchlass von der Innenseite des Hohlprofils einrasten, wenn das Hohlprofil auf den Verbinder 3.1 aufgeschoben ist. Wie am besten in Figur 3c zu erkennen ist, nähern sich die voneinander abgewandten Außenseiten der Rastklinken 14 zu ihrem freie Ende hin aneinander an und bilden jeweils an ihrem dem freien Ende abgewandten Ende einen Hinterschnitt. Der Verbinder 3.1 weist weiterhin einen Sockel 16 auf, mit einem Umfang, der zumindest abschnittsweise formschlüssig mit der Innenseite des Hohlprofils in Verbindung steht, wenn das Hohlprofil auf dem Verbinder 3.1 aufgeschoben ist. Der Steckverbinderkörper 1 weist an gegenüberliegenden Seiten 19 jeweils einen Widerhaken 20 auf, der in dem Bereich zwischen dem ersten und dem zweiten Ende 2,3 des Steckverbinderkörpers ausgebildet ist und dessen freies Ende 21 sich in Richtung des ersten Endes 2 des Steckverbinderkörpers 1 erstreckt.

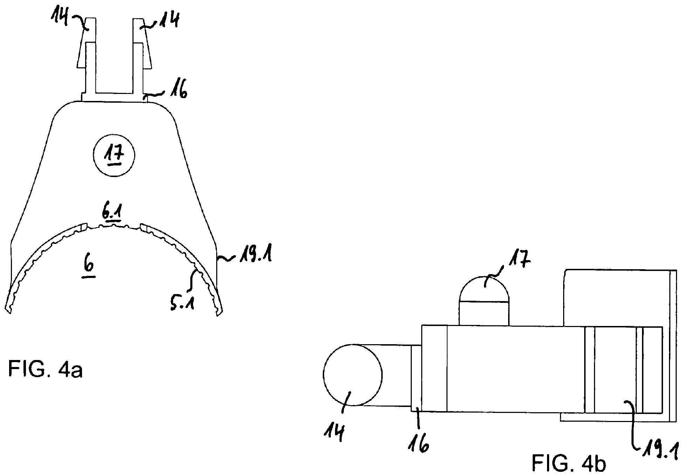

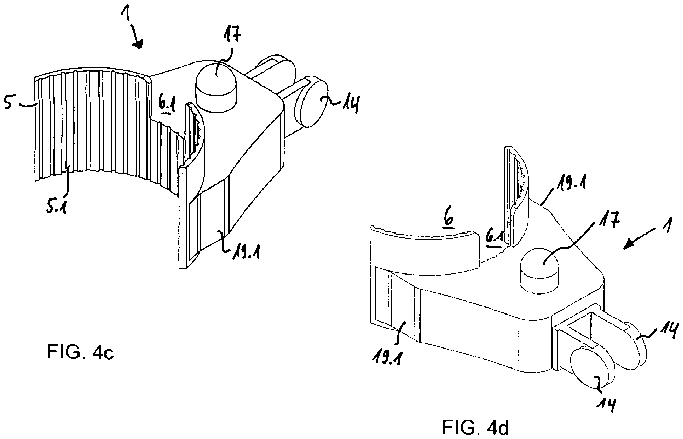

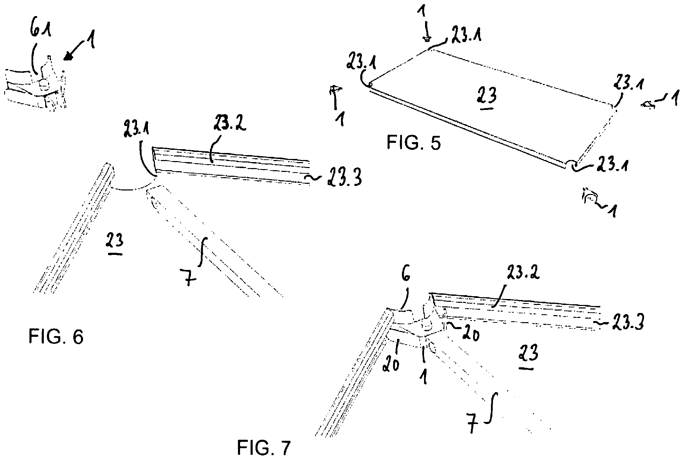

In den Figuren 4a bis 4d ist eine zweite Ausführungsform des erfindungsgemäßen Steckverbinderkörpers 1 dargestellt. Dieser unterscheidet sich von dem in den Figuren 3a bis 3d dargestellten darin, dass anstelle der an den gegenüberliegenden Seiten 19 jeweils angeordneten Widerhaken 20 ein bauchiger Ansatz 19.1 oder eine bauchige Anformung vorgesehen ist. Die bauchigen Ansätze 19.1 dienen dazu, den Steckverbinderkörper 1 an einem Einlegeboden oder dergleichen zu verklemmen. Die Funktionsweise der bauchigen Ansätze 19.1 ist mit Bezug auf die Figuren 5 bis 7 näher beschrieben. Im Übrigen unterscheidet sich der Steckverbinderkörper gemäß den Figuren 4a bis 4d nicht von der Ausführungsform gemäß den Figuren 3a bis 3d.

Mit Bezug auf die Figuren 5 bis 7 ist die Montage des Steckverbinderkörpers 1 an einem Einlegeboden 23 oder an einer Tischplatte veranschaulicht. Der rechteckige Einlegeboden 23 weist vorzugsweise an jeder seiner Ecken eine Ausnehmung 23.1 auf, in der der Steckverbinderkörper 1 aufgenommen werden kann. Vorzugsweise sind der Steckverbinderkörper 1 und die Ausnehmungen 23.1 derart aufeinander abgestimmt, dass die Anlagefläche 5 des Steckverbinderkörpers 1 unmittelbar an eine äußere Berandung des Einlegebodens 22 im Eckbereich dieses angrenzt und somit eine durchgehende Berandung des Einlegebodens ausbildet, wobei in dem Eckbereich des Einlegebodens 23 mit Hilfe des Steckverbinderkörpers 1 gerade ein Befestigungsabschnitt 6 (siehe Figur 3) ausgebildet wird. Im eingesetzten Zustand (siehe Figur 7) lagern die freien Ende 21 der Widerhaken 20 an den Innenseiten der Abkantungen 23.2 an, welche den Randbereich des Einlegebodens 23 ausbilden. Bevorzugt lagern die Widerhaken 20 in Aufnahmen 23.3, welche an der Innenseite der Abkantungen 23.2 ausgebildet sind. Dadurch ist der Steckverbinderkörper 1 im eingesetzten Zustand auch gegenüber einem ungewollten Verrutschen in Richtung senkrecht zu der Bodenfläche des Einlegebodens 23 gesichert. Anstelle der Widerhaken 20 kann der Steckverbinderkörper 1 auch, wie in den Figuren 4a bis 4d dargestellt, an den gegenüberliegenden Seiten 19 einen bauchigen Ansatz 19.1 aufweisen, welche eine Verklemmung des Steckverbinderkörpers 1 zwischen den senkrecht aufeinanderstehenden Abkantungen 23.2 des Einlegebodens 23 im Eckbereich bewirkt. Die Anlagefläche 5 des Steckverbinderkörpers 1 ist durch ein Durchlass 6.1 unterbrochen, welcher gerade dem Verbindungszapfen 17 vorgelagert ist. Durch diese Unterbrechung 6.1 hindurch ragt das Rastelement 8 des Lagerelements 4 mit seinem freien Ende 9 durch die Anlagefläche 5 hindurch in den Befestigungsabschnitt 6, wenn der Steckverbinderkörper 1 mit dem wie in Figur 2 dargestellt vormontierten Lagerelement 4 in Verbindung gebracht wird.

Eine aus einem Hohlprofil 7 hergestellte Querspange ist an ihrem einen Ende mit einem ersten Steckverbinderkörper 1 über dessen Verbinder 3.1 verbunden und an ihrem zweiten Ende mit einem dem ersten Steckverbinderkörper 1 diagonal gegenüber angeordneten Steckverbinderkörper 1 verbunden.

Ist auf die vorbeschriebene Weise an jeder Ecke des Einlegebodens 23 ein Steckverbinderkörper 1 vormontiert und über ein Hohlprofil 7 mit dem jeweils diagonal gegenüber angeordneten Steckverbinderkörper 1 verbunden worden, kann der Einlegeboden 23 in ein wie in Figur 2 dargestelltes vormontiertes Tisch- oder Regalgestell eingesetzt werden. Dazu wird der Einlegeboden 23 vorzugsweise an den oberen Enden der Tischbeine 22 bzw. der Regalpfosten angesetzt, wobei die Anlageflächen 5 der Steckverbinderkörper 1 mit der Außenkontur des jeweils zugeordneten Beinelements in Verbindung gebracht werden. Je nachdem auf welcher Höhe der Beinelemente 22 die Lagerelemente 4 vormontiert sind, wird der Einlegeboden 23 über die Anlageflächen 5 entlang den Außenkonturen der Beinelemente 22 abgesenkt, bis der Verbindungszapfen 17 auf die Durchlassöffnung 18 des Lagerelements 4 trifft, durch diese hindurchtritt und die Seite 12 des Steckverbinderkörpers 1 auf dem Lagerelement 4 lagert. Es kann vorgesehen sein, dass bei dem Hindurchtreten des Verbindungszapfen 17 durch die Durchlassöffnung 18 des Lagerelements 4 eine Verspannung zwischen dem Lagerelement 4 und dem Steckverbinderkörper 1 und damit zwischen dem Steckverbinderkörper 1 und dem Beinelement 22 zwecks Herstellung einer kraftschlüssigen Verbindung zwischen dem Einlegeboden 23 und dem jeweiligen Beinelement 22 hergestellt wird.

## Patentansprüche

1. Steckverbinder für ein Möbel, mit einem Steckverbinderkörper (1), der ein erstes Ende (2) aufweist, und mit einem Lagerlement (4), das lösbar mit dem Steckverbinderkörper (1) verbunden ist, wobei das erste Ende (2) einen Befestigungsabschnitt (6) mit einer Anlagefläche (5) und das Lagerelement (4) ein Rastelement (8) aufweist, das sich mit seinem freien Ende (9) durch die Anlagefläche (5) hindurch in den Befestigungsabschnitt (6) erstreckt, wenn der Steckverbinderkörper (1) mit dem Lagerelement (4) in Verbindung gebracht ist, wobei der Steckverbinderkörper (1) ein dem ersten Ende (2) gegenüber angeordnetes zweites Ende (3) aufweist, das einen Verbinder (3.1) für ein Hohlprofil (7) aufweist, wobei der Verbinder (3.1) mindestens eine Führungsfläche (3.2) aufweist, über die das Hohlprofil (7) entlang seiner Innenseite oder einer Außenseite auf den Verbinder (3.1) aufschiebbar ist, und wobei der Verbinder (3.1) weiterhin eine Lagerfläche (3.3) mit einer Rastklinke (14) aufweist, die in eine Aufnahme des Hohlprofils (7) einrastet, wenn das Hohlprofil (7) auf den Verbinder (3.1) aufgeschoben ist, wobei der Steckverbinderkörper (1) eine erste Seite (10) aufweist, die als Lagerfläche (11) für eine Tischplatte, einen Einlegeboden oder dergleichen ausgebildet ist, und eine der ersten Seite (10) gegenüberliegende zweite Seite (12) aufweist, die auf dem Lagerelement (4) lagert, wenn das Lagerelement (4) mit dem Steckverbinderkörper (1) in Verbindung steht, **dadurch gekennzeichnet, dass** die zweite Seite (12) des Steckverbinderkörpers (1) einen Verbindungszapfen (17) aufweist, der durch eine Durchlassöffnung (18) des Lagerelements (4) hindurch tritt, wenn der Steckverbinderkörper (1) mit dem Lagerelement (4) in Verbindung steht, und dass die Anlagefläche (5) die Außenkontur eines Tischbeins (22), eines Regalpfostens oder dergleichen abbildet.

2. Steckverbinder nach Anspruch 1, **dadurch gekennzeichnet, dass** der Verbinder (3.1) einen Sockel (16) aufweist, wobei der Sockel (16) einen Umfang aufweist, der zumindest abschnittsweise formschlüssig mit der Innenseite oder der Außenseite des Hohlprofils in Verbindung steht, wenn das Hohlprofil (7) auf dem Verbinder (3.1) aufgeschoben ist.

3. Steckverbinder nach einem der vorangegangenen Ansprüche, **dadurch gekennzeichnet, dass** das Rastelement (8) des Lagerelements (4) einen Zapfen (13) aufweist, an dessem freien Ende (9) ein Kopfstück mit einem Hinterschnitt ausgebildet ist.

4. Steckverbinder nach einem der vorangegangenen Ansprüche, **dadurch gekennzeichnet, dass** der Steckverbinderkörper (1) an gegenüberliegenden Seiten (19) jeweils mindestens einen Widerhaken (20) aufweist, der in dem Bereich zwischen dem ersten und dem zweiten Ende (2, 3) des Steckverbinderkörpers (1) ausgebildet ist und dessen freies Ende (21) sich in Richtung des ersten Endes (2) des Steckverbinderkörpers (1) erstreckt.

5. Steckverbinder nach einem der Ansprüche 1 bis 4, **dadurch gekennzeichnet, dass** der Steckverbinderkörper (1) an gegenüberliegenden Seiten (19) jeweils mindestens einen bauchigen Ansatz (19.1) aufweist, wobei der Steckverbinderkörper im Bereich der gegenüberliegenden Ansätze (19.1) eine Abmessung aufweist, die größer als die maximale Weite einer Ausnehmung (23.1) eines Einlegebodens (23) oder dergleichen ist, in welche der Steckverbinder einsetzbar ist.

## Claims

1. Connector for an item of furniture, comprising a connector body (1) which has a first end (2), and comprising a bearing element (4) which is detachably connected to the connector body (1), wherein the first end (2) has a fastening section (6) with a bearing surface (5) and the bearing element (4) has a latching element (8) which extends with its free end (9) through the bearing surface (5) into the fastening section (6) when the connector body (1) is brought into connection with the bearing element (4), wherein the connector body (1) has a second end (3) which is located opposite the first end (2) and which has a connection piece (3.1) for a hollow profile (7), wherein the connection piece (3.1) has at least one guide surface (3.2) via which the hollow profile (7), along its inner side or an outer side, can be pushed onto the connection piece (3.1), and wherein the connection piece (3.1) further has a bearing surface (3.3) with a latching mechanism (14) which latches into an opening of the hollow profile (7) when the hollow profile (7) is pushed onto the connection piece (3.1), wherein the connector body (1) has a first side (10) which is configured as a bearing surface (11) for a table top, a shelf or the like, and a second side (12) which is located opposite the first side (10) and which bears against the bearing element (4) when the bearing element (4) is connected to the connector body (1), **characterised in that** the second side (12) of the connector body (1) has a connection stud (17) which extends through a passage opening (18) of the bearing element (4) when the connector body (1) is connected to the bearing element (4), and **in that** the bearing surface (5) replicates the outer contour of a table leg (22), a shelving upright or the like.

2. Connector according to claim 1, **characterised in that** the connection piece (3.1) has a base (16), wherein the base (16) has a periphery which, at least in sections, is form-fittingly connected to the inner side or the outer side of the hollow profile when the hollow profile (7) is pushed onto the connection piece (3.1).

3. Connector according to any one of the preceding claims, **characterised in that** the latching element (8) of the bearing element (4) has a pin (13), at the free end (9) of which a head piece having an undercut is formed.

4. Connector according to any one of the preceding claims, **characterised in that** the connector body (1) has, on opposite sides (19), in each case at least one barb (20) which is formed in the region between the first and the second end (2, 3) of the connector body (1) and the free end (21) of which extends in the direction of the first end (2) of the connector body (1).

5. Connector according to any one of claims 1 to 4, **characterised in that** the connector body (1) has, on opposite sides (19), in each case at least one bulge-like shoulder (19.1), wherein the connector body has, in the region of the opposite shoulders (19.1), a dimension that is greater than the maximum width of a cutout (23.1) of a shelf (23) or the like, into which the connector can be inserted.

## Revendications

1. Connecteur par enfichage pour un meuble, avec un corps de connecteur par enfichage (1), qui présente une première extrémité (2), et avec un élément de support (4), qui est assemblé de manière amovible au corps de connecteur par enfichage (1), dans lequel la première extrémité (2) présente un tronçon de fixation (6) avec une surface d'appui (5) et l'élément de support (4) présente un élément d'encliquetage (8) qui s'étend avec son extrémité libre (9) à travers la surface d'appui (5) jusque dans le tronçon de fixation (6), lorsque le corps de connecteur par enfichage (1) est assemblé à l'élément de support (4), dans lequel le corps de connecteur par enfichage (1) présente une deuxième extrémité (3) disposée en vis-à-vis de la première extrémité (2), laquelle présente un connecteur (3.1) pour un profilé creux (7), dans lequel le connecteur (3.1) présente au moins une surface de guidage (3.2), sur laquelle le profilé creux (7) peut être enfilé par glissement sur le connecteur (3.1) le long de son côté intérieur ou le long d'un côté extérieur, et dans lequel le connecteur (3.1) présente par ailleurs une surface de support (3.3) avec un cliquet d'arrêt (14) qui s'enclenche dans un logement du profilé creux (7) lorsque le profilé creux (7) est enfilé par glissement sur le connecteur (3.1), dans lequel le corps de connecteur par enfichage (1) présente un premier côté (10), qui est réalisé comme une surface de support (11) pour un plateau de table, pour une tablette de rayonnage ou similaire et un deuxième côté (12) faisant face au premier côté (10), lequel repose sur l'élément de support (4) lorsque l'élément de support (4) est assemblé au corps de connecteur par enfichage (1), **caractérisé en ce que** le deuxième côté (12) du corps de connecteur par enfichage (1) présente un tourillon d'assemblage (17), qui passe à travers une ouverture de passage (18) de l'élément de support (4) lorsque le corps de connecteur par enfichage (1) est assemblé à l'élément de support (4), et que la surface d'appui (5) reproduit le contour extérieur d'un pied de table (22), d'un montant de rayonnage ou similaire.

2. Connecteur par enfichage selon la revendication 1, **caractérisé en ce que** le connecteur (3.1) présente un socle (16), dans lequel le socle (16) présente une périphérie, qui est au moins par endroits assemblée par complémentarité de forme au côté intérieur ou au côté extérieur du profilé creux lorsque le profilé creux (7) est enfilé par glissement sur le connecteur (3.1).

3. Connecteur par enfichage selon l'une quelconque des revendications précédentes, **caractérisé en ce que** l'élément d'encliquetage (8) de l'élément de support (4) présente un tourillon (13), à l'extrémité libre (9) duquel une pièce de tête est réalisée avec une contre-dépouille.

4. Connecteur par enfichage selon l'une quelconque des revendications précédentes, **caractérisé en ce que** le corps de connecteur par enfichage (1) présente au niveau de côtés se faisant face (19) respectivement au moins un ergot (20), qui est réalisé dans la zone entre la première et la deuxième extrémité (2, 3) du corps de connecteur par enfichage (1) et dont l'extrémité libre (21) s'étend en direction de la première extrémité (2) du corps de connecteur par enfichage (1).

5. Connecteur par enfichage selon l'une quelconque des revendications 1 à 4, **caractérisé en ce que** le corps de connecteur par enfichage (1) présente au niveau de côtés se faisant face (19) respectivement au moins un épaulement (19.1) bombé, dans lequel le corps de connecteur par enfichage présente dans la zone des épaulements (19.1) bombés se faisant face une dimension, qui est plus grande que la largeur maximale d'un évidement (23.1) d'une tablette de rayonnage (23) ou similaire, dans lequel le connecteur par enfichage peut être inséré.
